Europäisches Patentamt

European Patent Office

Office européen des brevets

(19)

(11) Veröffentlichungsnummer : **0 040 705**
**B1**

(12) **EUROPÄISCHE PATENTSCHRIFT**

(45) Veröffentlichungstag der Patentschrift :
08.02.84

(51) Int. Cl.³ : **G 02 B 7/26**

(21) Anmeldenummer : 81103174.9

(22) Anmeldetag : 28.04.81

(54) **Kopplungselement für Lichtwellenleiter.**

(30) Priorität : 24.05.80 DE 3019955

(43) Veröffentlichungstag der Anmeldung :
02.12.81 Patentblatt 81/48

(45) Bekanntmachung des Hinweises auf die Patenterteilung : 08.02.84 Patentblatt 84/06

(84) Benannte Vertragsstaaten :
DE FR GB IT

(56) Entgegenhaltungen :
EP-A- 0 018 873
US-A- 4 021 099
US-A- 4 185 885
Die Akte enthält technische Angaben, die nach dem Eingang der Anmeldung eingereicht wurden und die nicht in dieser Patentschrift enthalten sind.

(73) Patentinhaber : IBM DEUTSCHLAND GMBH
Pascalstrasse 100
D-7000 Stuttgart 80 (DE)
DE
International Business Machines Corporation
Old Orchard Road
Armonk, N.Y. 10504 (US)
FR GB IT

(72) Erfinder : Korth, Hans-Erdmann
Sandberger Strasse 34
D-7000 Stuttgart 1 (DE)

(74) Vertreter : Teufel, Fritz, Dipl.-Phys.
Schönaicher Strasse 220
D-7030 Böblingen (DE)

## Kopplungselement für Lichtwellenleiter

Die Erfindung betrifft ein Kopplungselement für Lichtwellenleiter nach dem Oberbegriff von Anspruch 1.

Die optische Nachrichtenübertragung mit Lichtwellenleitern (optischen Fasern) gewinnt infolge der hohen Übertragungskapazität dieses Übertragungsmediums, der mittlerweile erreichten geringen Dämpfung und des günstigen Herstellpreises immer größere Bedeutung. Zum Aufbau eines vollständigen Übertragungssystems müssen unter anderem lösbare Verbindungselemente, sogenannte optische Stecker, bereitgestellt werden, die auch in der praktischen Anwendung die hohen Anforderungen an die optische Qualität der Übertragungsleitung nicht beeinträchtigen ; dazu gehört insbesondere eine möglichst geringe Dämpfung der übertragenen Lichtwellen.

Bei den sehr geringen geometrischen Abmessungen der Lichtwellenleiter, die zwischen einigen μm (bei sogenannten Monomodefasern) und maximal 100 μm (bei Multimodefasern) liegen, ist bei der Ankopplung zweier Fasern durch gegenseitige Annäherung eine außerordentliche mechanische Präzision des Steckers erforderlich. Die bisher im Stand der Technik bekannt gewordenen Vorschläge zum Aufbau optischer Stecker (siehe z. B. den Artikel von M. Kaiser im Elektronik 1979, Heft 8, Seite 90) beruhen auf dem Prinzip der gegenseitigen Ausrichtung von Faserenden mit hochgenauen und damit teuren feinmechanischen Vorrichtungen.

Ein zweiter, zur Lösung dieses Problems vorgeschlagener Weg besteht darin, zwischen den beiden zu verbindenden Fasern ein optisches Abbildungssystem vorzusehen. Beispiele hierfür sind in den Deutschen Offenlegungsschriften 29 05 360 und 25 46 861 zu finden. Durch die hohen Genauigkeitsanforderungen werden aber auch derartige Abbildungssysteme aufwendig, teuer und schwer zu justieren.

Aus der US-PS 4 185 885 ist ein Verbinder für optische Fasern bekannt, bei dem an die miteinander zu verbindenden Faseren jeweils symmetrische, aneinander anschließbare Endstücke mit spiegelnden Oberflächen in Form von Rotationsparaboloiden angebracht sind, deren Rotationsachsen mit den Faserachsen zusammenfallen. Das von einem Faserende ausgehende Licht wird über einen Planspiegel auf diese Paraboloidflächen gerichtet und durch den Paraboloidspiegel des anschließenden Endstücks über einen auch dort vorhandenen ebenen Spiegel auf die Eintrittsöffnung des zweiten Faserendes fokussiert. Dieser optische Verbinder weist also mehrere Spiegelflächen auf, die zueinander justiert werden müssen und somit einen nicht unbeträchtlichen Herstellungsaufwand erfordern ; außerdem ist dieser Verbinder relativ voluminös, da die zur Strahlumlenkung verwendeten Planspiegel den Übertritt von Licht von einer Hälfte des Verbinders in die nächste nur durch einen relativ kleinen ringförmigen Außenbereich erlauben.

Zur Umgehung der gegenseitigen Anpassung sehr kleiner Abmessungen wurde schließlich vorgeschlagen, die zu verbindenden Fasern mit verdickten Endstücken auszustatten, um somit eine größere Anschlagsfläche mit weniger strengen Justiergenauigkeiten zu erhalten. Ein Beispiel für derartige optische Stecker liefert die Deutsche Auslegeschrift 21 35 254. Damit in den verdickten Endstücken die Lichtausbreitung weiterhin ungestört verläuft, ist es allerdings erforderlich, das Brechungsindexprofil in den verdickten Endstücken in bestimmter, z. B. parabolischer Weise auszugestalten. Dies ist zwar prinzipiell möglich, z. B. mit Ionenimplantation, doch ist der Herstellungsaufwand hierfür beträchtlich.

Aus der US-Patentschrift 4,021,099 ist ein sog. T-Koppler bekannt, dem die Enden zweier optischen Fasern zugeführt werden und der es ermöglicht, einen Teil des aus einem Faserende austretenden Lichtes an einen Verbraucher auszukoppeln und umgekehrt Licht an das andere Faserende einzukoppeln. Dazu besteht der Koppler aus zwei durchsichtigen Paraboloiden, die parallel zu ihrer Rotationsachse abgeschnitten und längs dieser Schnittebenen unlösbar miteinander verbunden sind. Jedes Paraboloid empfängt in seinem optischen Brennpunkt eine der Faserenden und koppelt einen Teil des an der Faser austretenden Lichtes über senkrecht zur Rotationsachse geschnittene Stirnflächen aus bzw. ein. Dieser Koppler ist also nicht dazu geeignet, eine lösbare Verbindung zwischen zwei Faserenden herzustellen, bei der das gesamte aus einem Faserende austretende Licht dem anderen Faserende wieder zugeführt wird. Bei der denkbaren Rückführung des ausgekoppelten Lichtanteils über die Stirnfläche des T-Kopplers auf das zweite Faserende ergibt sich bezüglich des direkt übertragenen Lichtes eine beträchtliche und unerwünschte Phasenverschiebung.

Die vorliegende Erfindung stellt sich daher die Aufgabe, eine lösbare Kopplungsanordnung für Lichtwellenleiter anzugeben, die trotz einfacher Herstellung und leichter Justierung ein Höchstmaß an optischer Qualität ermöglicht.

Diese Aufgabe wird durch die im Hauptanspruch gekennzeichnete Erfindung gelöst. Besondere Ausführungsarten der Erfindung sind in den Unteransprüchen angegeben.

Das Lösungsprinzip für den vorgeschlagenen optischen Stecker besteht darin, als eigentliches Koppelelement an jedem Faserende ein durchsichtiges Rotationsparaboloid zu verwenden, das senkrecht zur Symmetrieachse eine optisch ebene Fläche aufweist und das Faserende im oder nahe beim Brennpunkt zugeführt erhält. Zur Herstellung der optischen Verbindung werden die beiden Rotationsparaboloide mit ihren ebenen Stirnflächen gegeneinander gepreßt.

Das im oder nahe beim Brennpunkt der Rotationsparaboloide zugeführte Licht divergiert und wird durch Totalreflektion in einen Parallelstrahl umgewandelt. Die beiden im Vergleich zu den optischen Fasern sehr großen Stirnflächen der Rotationsparaboloide erlauben eine einfache Justierung. Der kritische Herstellschritt, nämlich die Zuführung der Faser genau im, oder in kontrollierter Weise versetzt vom, optischen Brennpunkt des Rotationsparaboloides, erfolgt bei der Herstellung und läßt sich somit sehr genau kontrollieren. Die optischen Verluste dieses Steckers sind sehr gering, ebenso die Staubanfälligkeit. Eine Veränderung der Modenverteilung, die sich bei manchen Übertragungsarten störend auswirkt, wird hier vermieden.

Ein weiterer beträchtlicher Vorteil dieses Steckers besteht darin, daß auf einfache Weise zusätzliche optische Elemente zwischen die Schnittflächen der Rotationsparaboloide gebracht werden können. Der Stecker erweitert sich somit vom einfachen Verbindungselement zu einem komplexen und vielseitigen optischen Element innerhalb des Übertragungssystems mit Lichtwellenleitern. Als Beispiel für zusätzlich einbringbare Komponenten seien Interferenzfilter genannt, die eine frequenzabhängige Aus- oder Einkopplung von Licht gestatten ; weitere Anwendungsgebiete sind Strahlteiler mit willkürlich wählbarem Teilerverhältnis, wellenlängenabhängige Koppler mit beliebig einstellbaren Transferfunktionen usw.

Wege zur Ausführung der Erfindung werden nun anhand von Zeichnungen näher erläutert. Es zeigen :

Figur 1A die Vorderansicht eines aus zwei symmetrischen Teilen bestehenden optischen Steckers im verbundenen Zustand,

Figur 1B die Aufsicht (Grundriß) auf einen verbundenen Stecker nach Fig. 1A,

Figur 2A die schematisierte Funktionsdarstellung (Funktionsdiagramm) eines optischen Steckers nach Fig. 1,

Figur 2B das Funktionsdiagramm des optischen Steckers nach Fig. 1 im Betrieb als Strahlteiler,

Figur 2C das Funktionsdiagramm des optischen Steckers nach Fig. 1 beim Betrieb als Ring-Interferometer,

Figur 2D das Funktionsdiagramm des optischen Steckers nach Fig. 1 mit einem zwischengeschalteten Mehrschichtinterferenzfilter beim Betrieb als Farbkoppler,

Figur 2E das Funktionsdiagramm des optischen Steckers nach Fig. 1 mit einem zwischengeschalteten Mehrschichtinterferenzfilter beim Betrieb als Einzelkanalwiederholverstärker,

Figur 2F das Funktionsdiagramm des optischen Steckers in Fig. 1 mit einem zwischengeschalteten polarisierenden Strahlteiler beim Betrieb als ausfallsicherer Auffrischverstärker.

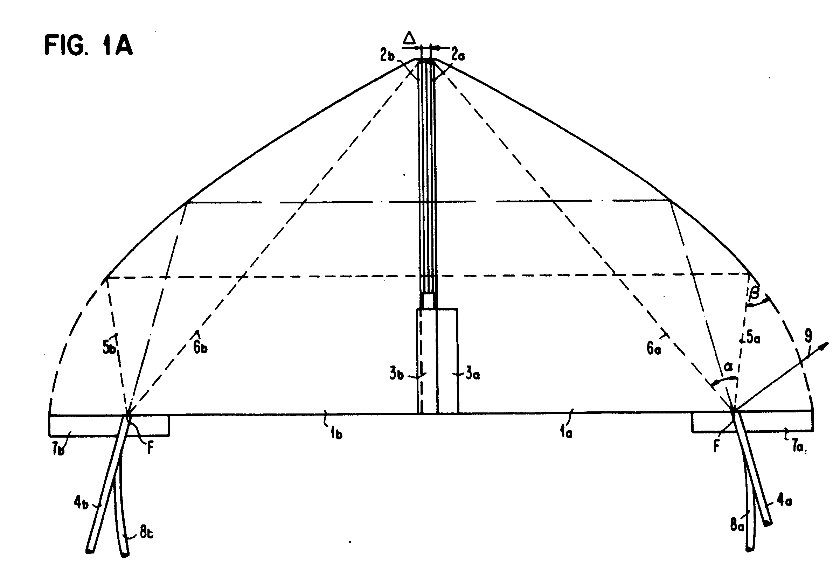

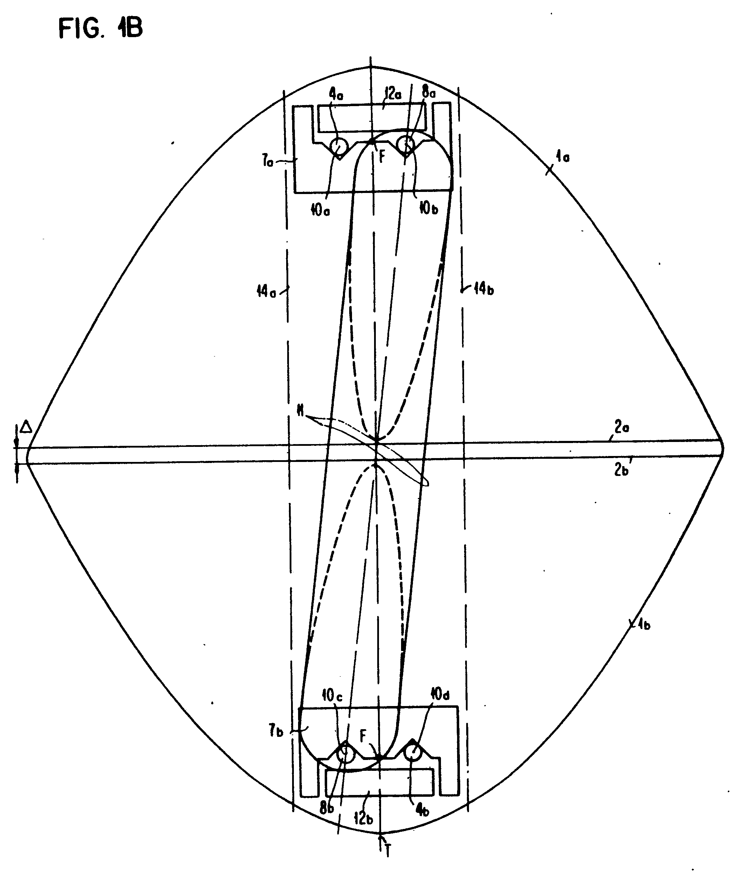

Den prinzipiellen Aufbau eines aus zwei symmetrischen Hälften bestehenden Paraboloidkopplers im vereinigten Zustand zeigen die beiden Teilfiguren A, B von Fig. 1. Gleiche Bezugszeichen in den Teilfiguren bezeichnen gleiche Elemente.

Die zueinander symmetrischen Hälften des Paraboloidkopplers 1a, 1b stellen jeweils Rotationsparaboloide aus durchsichtigem Material (z. B. Glas oder Kunststoff) dar. Die Paraboloide sind senkrecht zu ihrer Symmetrieachse abgeschnitten und kehren sich die beiden entstehenden Schnittflächen 2a, 2b zu. Diese Schnittflächen weisen eine hohe optische Qualität auf und können zur Herstellung der Verbindung entweder direkt aufeinander gelegt werden oder sich parallel in einem Abstand Δ gegenüberstehen. Im letztgenannten Fall weisen die beiden Paraboloide jeweils präzis gearbeitete Anschläge 3a, 3b auf, die eine Paralleleinstellung der Schnittflächen garantieren.

Nach dem Zusammenstecken des optischen Steckers kann der Zwischenraum Δ entweder frei bleiben, mit einer Immersionsflüssigkeit gefüllt oder mit weiteren optischen Bauelementen bestückt werden, deren Funktion später beschrieben wird.

Die miteinander optisch zu verbindenden Fasern 4a, 4b bzw. 8a, 8b werden mit Hilfe geeigneter Durchführungen entweder genau zum Brennpunkt F des jeweiligen Paraboloids geführt oder in dessen unmittelbare Nähe.

In der einfachsten Ausführungsform des optischen Steckers wird jedem Paraboloid nur eine optische Faser 4a, 4b direkt im Brennpunkt F zugeführt. Soll Licht von der Faser 4a zur Faser 4b gekoppelt werden, so ergeben sich folgende Verhältnisse : Das aus der Faser 4a mit einem Aperturwinkel α austretende Licht wird an der Oberfläche des Rotationsparaboloids total reflektiert und zu einem Parallelbündel gemacht, das die Schnittflächen der beiden Paraboloide senkrecht durchsetzt. Dieses Parallelbündel wird am zweiten Paraboloid 1b wiederum total reflektiert und in dessen Brennpunkt F gesammelt, wo es in die Austrittfaser 4b gelangt.

Die nutzbare Fiberapertur α wird durch die beiden Randstrahlen 5 und 6 bestimmt ; der Strahl 5 wird durch den Grenzwinkel β der Totalreflektion festgelegt, der Strahl 6 durch die Geometrie des Paraboloids.

Außerhalb des nutzbaren Aperturkegels verlaufende Strahlen (z. B. Strahl mit Bezugszeichen 9) gehen verloren ; auf diese Weise können beispielsweise Störmoden in der Faser auf einfache Weise ausgekoppelt werden.

In einer bevorzugten Ausführungsform werden die Enden der optischen Faser nicht direkt im Brennpunkt F des jeweiligen Rotationsparaboloids zugeführt, sondern an Punkten, die in einem gewissen Abstand davon symmetrisch zur Rotationsachse liegen. Diese Punkte sind in Fig. 1B mit 10a bis 10d bezeichnet. Sollen beispielsweise zwei einzelne optische Fasern 4a, 4b miteinander gekoppelt werden, so kann die eine am Punkt 10a eingeführt werden, die andere am Punkt 10d ; entsprechend ist auch die Einführung einer Faser 8a beim Punkt 10b und die Auskopplung in eine Faser 8b beim Punkt 10c möglich.

In Fig. 1B ist schematisch das Strahlenbündel 11 einer optischen Verbindung zwischen den Punkten 10b und 10c eingezeichnet. Die strichliert angegebenen verzerrten Ellipsen stellen die Auftreffpunkte der Aperturkegel auf der Fläche des Rotationsparaboloids dar. Die Randbereiche des Paraboloids (z. B. außerhalb der strichpunktierten Geraden 14a, 14b) werden vom Strahlengang nicht berührt und können daher bei der praktischen Ausführung entfallen.

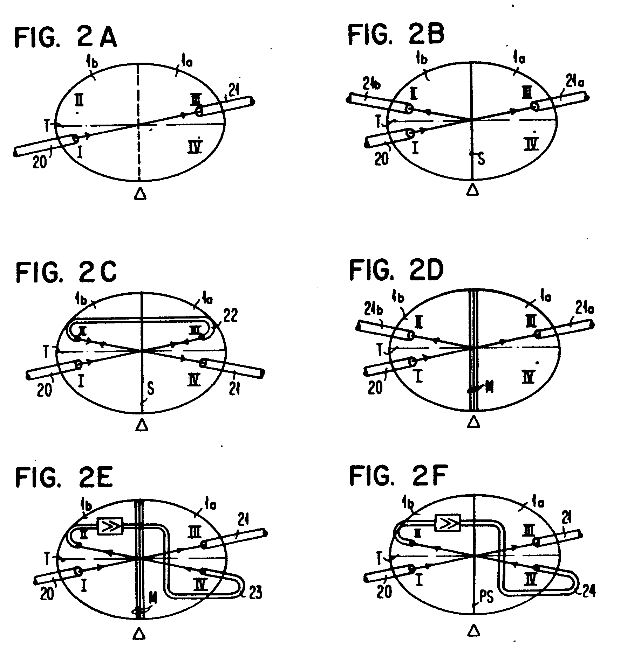

Die Verwendung von zwei symmetrischen Anschlußpunkten in jedem Rotationsparaboloid ermöglicht eine Vielzahl von Betriebsformen des Koppelelements ; insbesondere können damit die beiden Hälften des Kopplers auch isoliert betrieben werden. Dazu wird auf der Schnittfläche (bzw. im Zwischenraum Δ) ein Spiegel angebracht, so daß Licht, das beispielsweise vom Punkt 10a ausgeht, auf den Punkt 10b abgebildet wird. Werden alle vier symmetrischen Zuführungspunkte für optische Fasern belegt, so ergeben sich je nach Art der Lichtzuführung und dem im Zwischenraum Δ verwendeten optischen Element eine Vielzahl von Koppelmöglichkeiten zwischen den jeweils zu definierenden Ein- und Ausgängen. Einzelheiten dieser Anordnung werden später anhand von Fig. 2 erläutert.

Bei den symmetrisch zur Rotationsachse liegenden Anschlußpunkten der optischen Fasern muß darauf geachtet werden, daß die Faserenden in einer gemeinsamen Ebene liegen. Zur genauen Fixierung der Faserenden können beispielsweise V-förmige Vertiefungen in einem Halteblock 7 dienen, in denen die Faserenden eingelegt werden und von einem Gegenstück 12 festgehalten sind. Fig. 1B zeigt diese Anordnung in der Aufsicht.

Der hier beschriebene Paraboloidkoppler läßt sich als monolithische optische Komponente herstellen ; das Ende der optischen Fiber wird in den transparenten Paraboloidblock eingegossen ; vorher wird die Faser auf einfache Weise justiert, indem das an der Referenzfläche 2 reflektierte Licht auf den zweiten symmetrisch liegenden Anschlußpunkt zentriert wird. Auf diese einfache Weise können auch Single-Mode-Fasern mit ihrem sehr geringen Faserdurchmesser unter Fabrikbedingungen zentriert werden.

In Fig. 2 sind verschiedene Möglichkeiten der Schaltung eines Paraboloidkopplers unter Verwendung verschiedener weiterer optischer Bauelemente im Zwischenraum Δ beschrieben. Diese Funktionsdiagramme stellen schematisierte Grundriße (entsprechend Fig. 1B) dar. Die in Fig. 1B mit 10a-d bezeichneten Anschlußpunkte sind hier mit I-IV gekennzeichnet. Ein Strahlverlauf innerhalb der Stecker ist mit dünnen Linien angedeutet, beteiligte optische Fasern außerhalb der Stecker als dünne Röhren. Das eintreffende Licht wird jeweils über Faser 20 zugeführt, die Ausgangsfasern sind mit 21 bezeichnet.

Fig. 2A zeigt die Anwendung der beiden Rotationsparaboloide als einfachen lösbaren Stecker. Die miteinander optisch zu verbindenden Fasern 20, 21 werden an den Anschlußpunkten I und III angeschlossen, die jeweils in verschiedenen Hälften des Steckers beiderseits der Symmetrieachse T liegen. Die Schnittfläche zwischen den beiden Paraboloiden ist durch Punktierung angedeutet.

In Fig. 2B ist im Zwischenraum Δ zwischen den beiden Paraboloiden ein mit S bezeichneter Strahlteiler angebracht, z. B. eine entsprechend vergütete Glasplatte. Mit diesem Strahlteiler kann das am Anschlußpunkt I zugeführte Licht auf die beiden Ausgänge II (im gleichen Paraboloid 1b) und III (im anderen Paraboloid 1a) bzw. die Fasern 21a, 21b verteilt werden. Das Teilverhältnis ist dabei durch die Eigenschaften des Strahlteilers bestimmt und ·kann in weiten Grenzen geändert werden. Wenn keine Auskopplung erwünscht ist, kann ein völlig reflektierender Spiegel verwendet werden, um das beim Anschlußpunkt I eintreffende Licht verlustfrei auf den Anschlußpunkt II zu leiten. Diese Funktion kann z. B. von Vorteil sein, wenn die zweite Steckerhälfte nicht eingesteckt ist.

Fig. 2C zeigt eine Weiterbildung des Strahlteilers nach Fig. 2B, bei der der vom Strahlteiler S durchgelassene Anteil über eine Faser 22 vom Ausgang III zum Anschlußpunkt II des anderen Paraboloids 1b zurückgeführt wird. In dem Rückkopplungszweig interferieren die am Strahlteiler S reflektierten und durchgelassenen Lichtanteile miteinander ; die Interferenzstrahlung tritt durch den Strahlteiler S hindurch und kann am Anschlußpunkt IV des zweiten Paraboloids abgenommen werden. Es handelt sich hier also um ein Ring-(Sagnac)-Interferometer.

Fig. 2D zeigt einen Farbkoppler, der entsteht, wenn in den Zwischenraum Δ zwischen den beiden Paraboloiden ein optisches Filter M mit selektivem Durchgang (bzw. selektiver Reflektion) gebracht wird. Ein schmalbandiger Ausschnitt des am Eingang I zugeführten breitbandigen Lichts kann somit in den Fasern 21a, 21b am Ausgang II bzw. III abgenommen werden. Ein derartiges optisches Bandfilter läßt sich als separates Plättchen durch Zerteilen eines (bekannten) Vielschichtinterferenzfilters erzeugen und bei Bedarf in das Paraboloidkoppelelement einführen. Auf diese Weise lassen sich mit einfachen Mitteln Farbkoppler mit identischen Filtern erzeugen.

Fig. 2E zeigt einen schmalbandigen optischen Einzelkanalwiederholverstärker ; im Zwischenraum Δ zwischen den Paraboloiden ist wieder ein schmalbandiges optisches Filter M eingebracht, das nur einen sehr begrenzten Teil des Spektrums reflektiert. Dieser Teil wird am Anschlußpunkt II nach Reflektion abgenommen, über eine optische Faser 23 einem Verstärker zugeführt und am Anschluß IV des anderen Paraboloids 1a wieder eingespeist. Nach erneuter Reflektion wird der verstärkte Einzelkanal zusammen mit den vom Filter M durchgelassenen anderen Frequenzen an den Ausgang III weitergegeben.

In Fig. 2F ist schematisch ein ausfallsicherer optischer Auffrischverstärker dargestellt ; dazu wird zwischen die Paraboloide ein polarisierender Strahlteiler PS gebracht. Die an diesem Strahlteiler reflektierte Polarisationsrichtung wird am Anschlußpunkt II ausgekoppelt, verstärkt und über eine Faser 24 am Anschlußpunkt IV wieder eingekoppelt ; das verstärkte Licht wird bei der Reflektion im zweiten Paraboloid auf dessen Anschlußpunkt III abgebildet und stellt zusammen mit der ohne Verstärkung durchgelassenen anderen Polarisationsrichtung das Ausgangssignal dar. Beim Ausfall des Verstärkers bleibt in jedem Fall die nicht verstärkte Polarisationsrichtung als Ausgangssignal erhalten.

Derartige Koppelemente können zum Aufbau komplexer optischer Kommunikationssysteme verwendet werden, wie sie z. B. in der gleichzeitig eingereichten Europäischen Patentanmeldung : 0040706 beschrieben sind.

**Ansprüche**

1. Kopplungselement für Lichtwellenleiter (optische Fasern), mit zwei voneinander lösbaren, gleichartigen Hälften, die jeweils aus einem durchsichtigen Körper mit reflektierenden Begrenzungsflächen in Form eines Rotationsparaboloids bestehen, die einander gegenüberliegende Stirnflächen senkrecht zur Rotationsachse (T) aufweisen und deren Rotationsachsen (T) in einer Linie ausgerichtet sind, um das im Brennpunkt (F) des einen Rotationsparaboloids aus dem Ende der einen optischen Faser austretende Licht auf das Ende der anderen optischen Faser im Brennpunkt (F) des anderen Rotationsparaboloids zu fokussieren, dadurch gekennzeichnet, daß jede Hälfte (1a, 1b) eines Rotationsparaboloids längs der Rotationsachse (T) eine Schnittebene aufweist, daß die Achsen der optischen Fasern (4a, 4b) im wesentlichen senkrecht zu dieser Schnittebene der beiden Hälften (1a, 1b) angeordnet sind und daß die Faserenden im Brennpunkt (F) oder in dessen Nähe zugeführt werden.

2. Kopplungselement nach Anspruch 1, dadurch gekennzeichnet, daß die Achsen der optischen Fasern so gegen die Schnittebene geneigt sind, daß alle in dem aus einem Faserende austretenden Bündel enthaltenden Strahlen (5a, 6a) an den nicht verspiegelten Begrenzungsflächen der Rotationsparaboloide total reflektiert werden.

3. Kopplungselement nach Anspruch 1 oder 2, dadurch gekennzeichnet, daß jedes Rotationsparaboloid in seinem Brennpunkt ein Ende der miteinander zu verbindenden optischen Fasern empfängt.

4. Kopplungselement nach einem der Ansprüche 1 bis 3, dadurch gekennzeichnet, daß zwischen dessen beiden Rotationsparaboloiden (1a, 1b) nach Herstellung der Verbindung ein senkrecht zur Rotationsachse liegender Parallelspalt (mit Breite Δ) vorhanden ist.

5. Kopplungselement nach einem der Ansprüche 1 bis 4, dadurch gekennzeichnet, daß jedem Rotationsparaboloid (1a, 1b) zwei optische Fasern (4a, 8a, bzw. 4b, 8b) an Anschlußpunkten (10a, 10b bzw. 10c, 10d ; Fig. 1B) zugeführt werden, die in der Schnittebene symmetrisch zum Brennpunkt (F) liegen.

6. Kopplungselement nach Anspruch 5, dadurch gekennzeichnet, daß zur optischen Kopplung zweier Fasern (20, 21 ; Fig. 2A) die Eingangsfaser in einem Anschlußpunkt (I bzw. II) zugeführt wird, der bezüglich des Anschlußpunkts der Ausgangsfaser (III bzw. IV) auf der anderen Seite der Rotationsachse (T) liegt und daß der Parallelspalt (Δ) leer bleibt oder mit einem Medium gefüllt wird, dessen Brechungsindex dem der Rotationsparaboloide (1a, 1b) entspricht.

7. Kopplungselement nach Anspruch 5, dadurch gekennzeichnet, daß zum Aufbau eines Strahlteilers eine Strahlteilerplatte (S ; Fig. 2B) in den Parallelspalt (Δ) eingeführt wird und daß der Anschlußpunkt (I) der Eingangsfaser (20) und die Anschlußpunkte (II, III) der Ausgangsfasern auf verschiedenen Seiten der Rotationsachse (T) liegen.

8. Kopplungselement nach Anspruch 5, dadurch gekennzeichnet, daß zum Aufbau eines Ringinterferometers in den Parallelspalt (Δ) eine Strahlteilerplatte (S ; Fig. 2C) eingeführt wird, daß zwei auf derselben Seite der Rotationsachse (T) liegende Anschlußpunkte (II, III) durch eine optische Faser (22) miteinander verbunden sind und daß Eingangsfaser (20) und Ausgangsfaser (21) Anschlußpunkten (I, IV) der anderen Seite der Rotationsachse (T) zugeführt werden.

9. Kopplungselement nach Anspruch 5, dadurch gekennzeichnet, daß zum Aufbau eines Farbkopplers in den Parallelspalt (Δ) ein optisches Bandfilter (M ; Fig. 2D) gebracht wird, daß der Eingangsanschlußpunkt (I) auf der einen Seite der Rotationsachse (T) und die Ausgangsanschlußpunkte (II, III) auf der anderen Seite der Rotationsachse liegen.

10. Kopplungselement nach Anspruch 5, dadurch gekennzeichnet, daß zum Aufbau eines optischen Einzelkanalwiederholverstärkers in den Parallelspalt (Δ) ein optisches Bandfilter (M ; Fig. 2E) gebracht wird, daß Eingangsanschlußpunkt (I) und Ausgangsanschlußpunkt (III) auf verschiedenen Seiten der Rotationsachse (T) liegen und daß die übrigen Anschlußpunkte (II, IV) durch eine optische Faser (23) miteinander verbunden sind.

11. Kopplungselement nach Anspruch 5, dadurch gekennzeichnet, daß zum Aufbau eines ausfallsicheren optischen Auffrischverstärkers in dem Parallelspalt (Δ) ein polarisierender Strahlteiler (PS ; Fig. 2F) gebracht wird, daß sich Eingangsanschlußpunkt (I) und Ausgangsanschlußpunkt (III) auf verschiedenen Seiten der Rotationsachse (T) gegenüberliegen und daß die übrigen Anschlußpunkte (II, IV) durch eine optische Faser (24) miteinander verbunden sind.

12. Kopplungselement nach einem der Ansprüche 1 bis 5, dadurch gekennzeichnet, daß die Stirnflächen (2a, 2b) der Rotationsparaboloide im nichtverbundenen Zustand eine reflektierende Auflage erhalten, um das an einem Anschlußpunkt (z. B. I) eintretende Licht in den symmetrisch zur Rotationsachse (T) liegenden Anschlußpunkt (z. B. II) zurückzuleiten.

13. Koppelelement nach einem der Ansprüche 6 bis 11, dadurch gekennzeichnet, daß zur Erzielung identischer optischer Eigenschaften verschiedener Koppelemente nur solche optische Bauteile in die Parallelspalten (Δ) eingeführt werden, die unter identischen Herstellbedingungen entstanden.

14. Koppelelement nach einem der Ansprüche 1 bis 13, dadurch gekennzeichnet, daß nur diejenigen Teile der Rotationsparaboloide ausgeführt sind, die vom Strahlengang berührt werden.

## Claims

1. Coupling element for light wave guides (optical fibers) with two identical halves which are disconnectable from each other, each half consisting of a transparent body with reflecting boundary faces in the form of a paraboloid of revolution having opposite faces perpendicular to the axis of revolution (T) and axes of revolution (F) aligned in one line for focussing the light exiting from the end of one optical fiber at focus (F) of one paraboloid of revolution on to the end of the other optical fiber at focus (F) of the other paraboloid of revolution, characterized in that each half (1a, 1b) of a paraboloid of revolution has a plane of intersection along the axis of revolution (T), that the axes of the optical fibers (4a, 4b) are substantially perpendicular to said plane of intersection of the two halves, and that the fiber ends are attached at focus (F) or in its vicinity.

2. Coupling element according to claim 1, characterized in that the axes of the optical fibers are so inclined towards the plane of intersection that all rays (5a, 6a) of the beam exiting from one fiber end are totally reflected at the non-reflecting boundary faces of the paraboloids of revolution.

3. Coupling element according to claim 1 or 2, characterized in that each paraboloid of revolution is attached at its focus to one end of the optical fibers to be connected to each other.

4. Coupling element according to any one of the claims 1 to 3, characterized in that after connection of the two paraboloids of revolution (1a, 1b), there exists a parallel gap (with a width Δ) perpendicular to the axis of revolution.

5. Coupling element according to any one of the claims 1 to 4, characterized in that each paraboloid of revolution (1a, 1b) at connecting points (10a, 10b and 10c, 10d, respectively, Fig. 1B) has connected to it two optical fibers (4a, 8a, and 4b, 8b, respectively) which in the plane of intersection are disposed symmetrically to focus (F).

6. Coupling element according to claim 5, characterized in that for optically coupling two fibers (20, 21 ; Fig. 2A), the entry fiber is connected at a connecting point (I and II, respectively) which relative to the connecting point of the exit fiber (III and IV, respectively) is arranged on the opposite side of the axis of revolution (T), and that the parallel gap (Δ) remains empty or is filled with a medium, the refractive index of which corresponds to that of the paraboloids of revolution (1a, 1b).

7. Coupling element according to claim 5, characterized in that for forming a beam splitter, a beam splitter plate (S ; Fig. 2B) is introduced into the parallel gap (Δ), and that the connecting point (I) of the entry fiber (20) and the connecting points (II, III) of the exit fibers are arranged on opposite sides of the axis of revolution (T).

8. Coupling element according to claim 5, characterized in that for forming a ring interferometer, a beam splitter plate (S ; Fig. 2C) is introduced into the parallel gap (Δ), that two connecting points (II, III), arranged on the same side of the axis of revolution (T), are connected to each other by an optical fiber (22), and that entry fiber (20) and exit fiber (21) are connected to connecting points (I, IV) on the opposite side of the axis of revolution (T).

9. Coupling element according to claim 5, characterized in that for forming a colour coupler, an optical bandfilter (M ; Fig. 2D) is introduced into the parallel gap (Δ), that the entry connecting point (I) is arranged on one side of the axis of revolution (T), whereas the exit connecting point (II, III) is arranged on the opposite side of the axis of revolution.

10. Coupling element according to claim 5, characterized in that for forming an optical single-channel repeat amplifier, an optical bandfilter (M ; Fig. 2E) is introduced into the parallel gap (Δ), that the entry connecting point (I) and the exit connecting point (III) are arranged on opposite sides of the axis of revolution (T), and that the remaining connecting points (II, IV) are connected to each other by an optical fiber (23).

11. Coupling element according to claim 5, characterized in that for forming a fail-safe optical refresh amplifier, a polarizing beam splitter (PS ; Fig. 2F) is introduced into the parallel gap (Δ), that the entry connecting point I and the exit connecting point (III) are arranged on opposite sides of the axis of revolution (T), and that the remaining connecting points (II, IV) are connected to each other by an optical fiber (24).

12. Coupling element according to any one of the claims 1 to 5, characterized in that the faces (2a, 2b) of the paraboloids of revolution in the unconnected state are provided with a reflecting coating for feeding the light incident at a connecting point (e. g., I) back to the connecting point (e. g., II) arranged symmetrically to the axis of revolution (T).

13. Coupling element according to any one of the claims 6 to 11, characterized in that for obtaining identical optical characteristics for different coupling elements, only those optical components manufactured under identical conditions are introduced into the parallel gaps (Δ).

14. Coupling element according to any one of the claims 1 to 13, characterized in that only those parts of the paraboloids of revolution are realized which are touched by the beam path.

## Revendications

1. Elément de couplage pour guide d'ondes optiques (fibres optiques), comportant deux parties similaires enfichables, chacune étant constituée par un corps transparent comprenant des surfaces de délimitation réfléchissantes en forme de paraboloïde de révolution qui comportent des surfaces frontales opposées l'une à l'autre perpendiculaires à l'axe de rotation (T) et dont les axes de rotation (T) sont alignés sur une ligne de façon à concentrer le faisceau lumineux sortant de l'extrémité d'une fibre optique dans le foyer (F) d'un des paraboloïdes de révolution sur l'extrémité de l'autre fibre optique dans le foyer (F) de l'autre paraboloïde révolution, caractérisé en ce que chacune des deux parties (1a, 1b) d'un paraboloïde de révolution présente le long dudit axe de rotation un plan d'interface, que les axes desdites fibres optiques (4a, 4b) sont substantiellement perpendiculaires audit plan d'interface des deux dites parties (1a ; 1b), et que lesdites extrémités de fibres sont situées dans ledit foyer (F) ou dans sa proximité.

2. Elément de couplage selon la revendication 1, caractérisé en ce que les axes desdites fibres optiques sont inclinées vers ledit plan d'interface de sorte que tous les rayons (5a, 6a) contenus dans un faisceau sortant d'une extrémité de fibre soient réfléchis dans leur totalité vers les surfaces de délimitation non réfléchissantes desdits paraboloïdes de révolution.

3. Elément de couplage selon la revendication 1 ou 2, caractérisé en ce que chaque paraboloïde de révolution reçoit dans son foyer une extrémité des fibres optiques à connecter.

4. Elément de couplage selon une des revendications 1 à 3, caractérisé en ce qu'un espace parallèle (de largeur Δ) perpendiculaire audit axe de rotation sépare, une fois la connexion établie, les deux paraboloïdes de révolution (1a, 1b).

5. Elément de couplage selon une des revendications 1 à 4, caractérisé en ce que deux fibres optiques (4a, 8a et 4b, 8b) sont appliquées à des points de connexion (10a, 10b, et 10c, 10d ; figure 1b) dans chacun des deux paraboloïdes de révolution (1a, 1b), lesquels points de connexion sont disposés, dans ledit plan servant d'interface, de façon symétrique audit foyer (F).

6. Elément de couplage selon la revendication 5, caractérisé en ce que, pour coupler optiquement les deux dites fibres (20, 21 ; figure 2A), la fibre d'émission est appliquée à un point de connexion (I et II), situé en regard du point de connexion de la fibre de réception (III et IV) de l'autre côté de l'axe de rotation (T), et que ledit espace parallèle (Δ) reste vide ou est remplie d'un milieu dont l'indice de réfraction correspond à celui des paraboloïdes de révolution (1a, 1b).

7. Elément de couplage selon la revendication 5, caractérisé en ce que, pour obtenir un diviseur de faisceau, on introduit une plaque diviseuse de faisceau (S ; figure 2b) dans ledit espace parallèle (Δ) et que le point de connexion (I) de la fibre d'émission (20) et les points de connexion (II, III) des fibres de réception sont situés sur des côtés différents dudit axe de rotation (T).

8. Elément de couplage selon la revendication 5, caractérisé en ce que, pour obtenir un interféromètre annulaire, on introduit dans ledit espace parallèle (Δ) une plaque diviseuse de faisceau (S ; figure 2C), que deux points de connexion (II, III) situés sur le même côté de l'axe de rotation (T) sont reliés au moyen d'une fibre optique (22) et que la fibre d'émission (20) et la fibre de réception (21) sont appliquées à des points de connexion (I, IV) situés dans l'autre côté de l'axe de rotation (T).

9. Elément de couplage selon la revendication 5, caractérisé en ce, pour obtenir un coupleur de couleur, on dispose dans ledit espace parallèle (Δ) un filtre de bande optique (M ; figure 2D), que le point de connexion à l'émission (I) est situé dans un des côtés dudit axe de rotation (T) et que les points de connexion à la réception (II, III) sont situés dans l'autre côté dudit axe de rotation.

10. Elément de couplage selon la revendication 5, caractérisé en ce que, pour obtenir un amplificateur répéteur à monocanal optique, on dispose dans ledit espace parallèle (Δ) un filtre de bande optique (M ; figure 2E), que le point de connexion à l'émission (I) et le point de connexion à la réception (III) sont situés, opposés l'un à l'autre, dans des côtés différents dudit axe de rotation (T) et que les autres points de connexion (II, IV) sont reliés au moyen d'une fibre optique (23).

11. Elément de couplage selon la revendication 5, caractérisé en ce que, pour obtenir un amplificateur de régénération à sûreté intégrée optique, on dispose dans ledit espace parallèle (Δ) un diviseur de faisceau polarisant (PS. figure 2F), que le point de connexion à l'émission (I) et le point de connexion à la réception (III) sont situés, opposés l'un à l'autre, dans différents côtés dudit axe de rotation (T) et que les autres points de connexion (II, IV) sont reliés au moyen d'une fibre optique (24).

12. Elément de couplage selon une des revendications 1 à 5, caractérisé en ce que lesdites surfaces frontales (2a, 2b) des paraboloïdes de révolution sont, à l'état non-connecté réfléchissantes de manière à renvoyer le faisceau lumineux d'un point de connexion (par exemple, I) vers le point de connexion (par exemple, II) qui lui est symétrique par rapport à l'axe de rotation (T).

13. Elément de couplage selon une des revendications 6 à 11, caractérisé en ce que, afin que les différents éléments de couplage aient des caractéristiques optiques identiques, seuls les éléments optiques ayant été fabriqués dans les mêmes conditions sont introduits dans les différents espaces parallèles.

14. Elément de couplage selon une des revendications 1 à 13, caractérisé en ce que, seules les parties desdits paraboloïdes de révolution se trouvant dans le chemin du faisceau sont réalisées.

FIG. 1A

0 040 705

FIG. 1B

FIG. 2 A

FIG. 2B

FIG. 2 C

FIG. 2D

FIG. 2E

FIG. 2F